# EUROPEAN PATENT APPLICATION

(11) **EP 4 525 247 A1**
(43) Date of publication of application: **19.03.2025**
(21) Application number: 23197758.8
(22) Date of filing: 15.09.2023
(51) Int. Cl.: H02J 3/00, C25B 15/02, H02H 7/18

(54) **FAST DE-ENERGIZABLE POWER SUPPLY FOR AN ELECTROLYSIS SYSTEM**

(71) Applicant: Siemens Energy Global GmbH & Co. KG, 81739 München (DE)
(72) Inventor: Craciun, Bogdan, 18069 Rostock (DE); Runser, Thibaut, 90478 Nürnberg (DE); Bendig, Marvin, 90513 Zirndorf (DE)

(57) **Abstract**

The invention relates to a fast de-energizable power supply 120 for an electrolysis system 100. It comprises an alternating current power supply input 122 connectable to an AC power grid 101, a direct current power supply output 121 connected to an electrolyser unit 110, an alternating current-to-direct current power conversion unit 125 having an AC-DC converter output 126, a controller unit 127 configured to provide a discharge control signal in response to a malfunction of the electrolyser unit 110, at least one discharge resistor device 130, 247, 354, and an active switching device 131, 246, 353 configured to enable a discharging current flow at least from said connected electrolyser unit 110 through the at least one discharge resistor device 130, 247, 354 in response to receiving said discharge control signal.

## Description

The present disclosure in general relates to safety measures for power supplies of electrolysis systems in case of electrolyser malfunction. In particular, the present disclosure relates to a fast de-energizable power supply for an electrolysis system and to an electrolysis system. Further, the present disclosure relates to a method of operating a fast de-energizable power supply for an electrolysis system and to a computer program product.

Electrolysis is a process of using electricity to split water into hydrogen and oxygen. This reaction takes place in a unit called an electrolyser, e.g., a polymer electrolyte membrane (PEM) electrolyser unit, and requires the supply of direct current (DC). An electrolysis system may comprise one or more electrolyser units which constitute a high-power load and may have a high current demand of DC current, e.g., 7-10 kA. This DC current is provided by a power supply connected to an alternating current (AC) power source, in particular a (private or public) AC power grid, and containing at least an alternating current-to-direct current (AC-DC) power conversion unit with a rectifier configured to generate output DC power from input AC power.

A power supply for an electrolysis system is supposed to function reliably under any condition. Hydrogen can be highly combustible and therefore, electrolyser safety has a high priority and hydrogen production has to take place under controlled conditions at any time, and there is a need for fast, reliable and predictable safety shutdowns in situations of failure or other malfunction of the electrolysis system. For example, the safety might be put to a test if gas concentrations change beyond a permissive range or if the electrolyser stack itself or other, auxiliary components of the electrolyser unit encounter defects or show malfunctioning signs.

For such situations, the Layers of Protection Analysis (LOPA) and Hazard and Operability (HAZOP) safety procedures define strict rules to be followed and the power supply of the electrolyser needs to be able to stop the supply of power in such malfunction situations in order to meet defined Safety Integrity Level (SIL) requirements.

An immediate disconnection of the power supply from a malfunctioning electrolyser unit might leave the electrolyser energized, which in case a certain response time is required during which maintenance personnel needs to access the equipment, might potentially lead to unsafe situations. On the other hand, in certain configurations a delayed disconnection of the electrolyser unit may allow the energized electrolyser unit still connected to the power supply to charge internal capacitors of the power supply or let the power supply continue its supply of DC power for a short time even if it is immediately disconnected from the AC power grid, due to still charged internal capacitances, such as DC-link capacitors.

While for scheduled maintenance of the electrolysis system, the natural discharge of the electrolysis system over a suitably long period of standstill time could be used, or a faster discharge could be achieved, particularly for power supplies using thyristor-based power converters, by using discharge resistors which could be connected with a mechanical switch to the electrolyser unit to guarantee that after a certain period of time the electrolyser unit is discharged and the input DC voltage becomes OV.

However, such an approach does not address an immediate response in case of malfunction or failure of an electrolyser component which requires a fast intervention of the maintenance personnel and, therefore, a prior fast de-energization of the electrolysis system.

It is an objective of the present invention to provide a cost-efficient possibility for a controlled, fast, reliable and safe de-energization of an electrolysis system in situations of malfunction.

This objective is solved by a fast de-energizable power supply for an electrolysis system as stated in claim 1 and an electrolysis system as stated in claim 10. A corresponding method of operating such a fast de-energizable power supply for an electrolysis system, and a computer program product are disclosed in claims 11 and 15, respectively. Advantageous additional embodiments of the invention are disclosed in the respective dependent claims and the description.

According to a first aspect of the invention, a fast de-energizable power supply for an electrolysis system comprises an alternating current (AC) power supply input connectable to an AC power grid, a direct current (DC) power supply output connected to an electrolyser unit, an alternating current-to-direct current (AC-DC) power conversion unit having an AC-DC converter output, a controller unit configured to provide a discharge control signal in response to a malfunction of the electrolyser unit, at least one discharge resistor device, and an active switching device configured to enable a discharging current flow at least from said connected electrolyser unit through the at least one discharge resistor device in response to receiving said discharge control signal.

The controller unit may be or be part of a controller, particularly a programmable controller, i.e., a programmable device or programmable apparatus comprising at least a processor and a memory unit, configured, e.g., to receive a malfunction information from the electrolyser unit, to generate a discharge control signal to control the active switching device and to set switches for enabling and disabling connections within the power supply.

The malfunction information may, for example, be derived from sensor signals received by one or more sensors sensing electrical, physical and/or chemical parameters of the electrolyser unit, such as voltage, temperature or gas concentration changes, or may be received from a human, e.g., by means of an alarm button or other user interface.

A power conversion unit is or comprises a DC-DC converter unit or an AC-DC converter unit, and may additionally comprise additional circuitry, such as an input filter, e.g., a high-frequency filter. An AC-DC power conversion unit comprises an AC-DC converter, i.e., a rectifier.

An AC power grid can be the public AC power grid or a private grid that connects the power supply of the electrolysis system with at least one AC power source such as a power plant, e.g., a wind farm or a generator of a wind turbine.

A discharge resistor device is a resistor or arrangement of resistors dedicated to consuming electrical power that cannot be recovered back into the grid by receiving discharge current from the electrolyser unit and/or charged capacitive devices such as DC-link capacitors.

An active switching device is a semiconductor device configured to enable and disable an electrical connection depending on an electrical input signal. For example, any transistor may be used as an active switching device. For the described power supply, for example Insulated Gate Bipolar Transistors (IGBP), thyristors, or power metal oxide semiconductor field-effect transistors (power MOSFET) may be used as active switching devices.

In a preferred embodiment, the fast de-energizable power supply further comprises one or more direct current-link capacitors connected to said AC-DC converter output, and the active switching device is configured to enable discharging current flow from said one or more direct current-link capacitors through the at least one discharge resistor device in response to receiving the discharge control signal.

A direct current link capacitor, i.e., a DC-link capacitor, connected to an output of (or integrated in) a power conversion unit, has a capacitance big enough to store enough charge to allow for an uninterrupted supply of power during a certain period of time at a required level even if the power conversion unit itself is unable to provide the required power during that period of time.

By using a fast active switching device for connecting a discharge resistor device to receive discharge current at least from the still connected energized electrolyser unit and/or from charged DC-link capacitors, the discharging, i.e. de-energizing, can be achieved faster than, e.g., using mechanical switches to connect a discharge resistor device to receive discharge current from the DC-link of the power supply and the connected electrolyser unit. Further, the amount of discharge current over time can be controlled and adjusted by varying or adapting switching periods of the discharge control signal. Furthermore, discharge control using an active switching device is easy and cheap to implement, as the same device technology as for other active components of the power conversion unit(s) of the power supply can be used.

In an embodiment of the fast de-energizable power supply, the controller unit is further configured to disconnect the alternating current-to-direct current (AC-DC) power conversion unit from the AC power grid in response to the malfunction of the electrolyser unit. This will stop the further generation of DC current. The disconnection can be achieved by setting a switch connecting the AC power supply input to the AC power grid to an OFF state, i.e., to a disabled- or disconnect-state. In an embodiment, a switching device of the AC-DC power conversion unit dedicated to connecting and disconnecting the AC-DC power conversion unit input may disconnect the AC-DC power conversion unit. In case the AC-DC power conversion unit comprises a high frequency filter unit, the controller unit can be further configured to disconnect or disable the high-frequency filter unit in response to the malfunction of the electrolyser unit. This may protect the high frequency filter unit from receiving any discharge current. Further, in case the power supply comprises an additional pre-charge AC-DC power conversion unit for providing pre-charge DC current to DC-link capacitors during normal operation ramp-up or ramp-down phases of the electrolysis system, the controller unit can be further configured to disconnect or disable the additional pre-charge AC-DC power conversion unit in response to the malfunction of the electrolyser unit.

In an embodiment, the fast de-energizable power supply further comprises a direct current-to-direct current (DC-DC) power conversion unit having a DC-DC converter input connected to the AC-DC converter output. In other words, the fast de-energizable power supply is a double-stage (or multi-stage) power supply with an AC-DC power conversion unit as a first stage and a DC-DC power conversion unit as a second stage.

In a preferred embodiment of the fast de-energizable power supply, the alternating current-to-direct current (AC-DC) power conversion unit comprises a rectifier unit, i.e., an AC-DC converter unit, that comprises the active switching device. That is, no additional active switching device is required, but one of the active switching devices the rectifier unit is built from, for example an IGBT, a thyristor or a power MOSFET, has the one or more discharge resistor devices connected and is configured to enable provision of the discharge current to the one or more discharge resistor devices depending on the discharge control signal from the controller unit when a malfunction information is received from the electrolyser unit, i.e. when the power supply is in a malfunction or discharge mode instead of the normal operation mode. For example, in a full bridge arrangement of the switching elements of the rectifier unit, i.e. the AC-DC converter unit, a switching element situated on the TOP side of the full bridge of the AC-DC converter unit may be used as the active switching device and a discharge resistor device can be placed in the AC circuit part of the AC-DC converter unit. In case a 3-phase system is used, the discharge resistor device can be connected to any of the phases, if the phase to which it is connected implies the use of the respective TOP switch in the full bridge configuration as said active switching device.

In an example embodiment, the rectifier unit, i.e. the AC-DC converter unit, is configured as a full bridge circuit arrangement that comprises said active switching device and also an additional active switching device configured to enable the discharging current flow together with said active switching device in response to receiving the discharge control signal. Preferably, corresponding TOP side and BOTTOM side switching elements are used as the active switching devices configured to connect a discharge resistor device to receive the discharge current. Using two of the switching elements of the rectifier unit, i.e. the AC-DC converter unit, for switching the discharge current during malfunction mode for example provides additional freedom for choosing a suitable position of the discharge resistor device.

In an alternative embodiment of the fast de-energizable power supply, the direct current-to-direct current (DC-DC) power conversion unit comprises the active switching device. That is, the power supply is a double stage power supply with a DC-DC power conversion unit, and one of the switching elements of the DC-DC converter unit is used as the active switching device configured to let the discharge current flow through a connected discharge resistor device. In case of a half bridge configuration of the DC-DC converter unit, for example the BOTTOM switching element can be used. In case the DC-DC converter unit is in a full bridge arrangement, corresponding TOP and BOTTOM switching elements can be used as active switching devices configured to transfer the discharge current to the discharge resistor device.

In a preferred embodiment of the fast de-energizable power supply, the at least one discharge resistor device is configured to be disabled in an absence of the malfunction of the electrolyser unit. This has the advantage that no power is consumed by the at least one discharge resistor device during normal operation mode. Depending on the position chosen for the discharge resistor device, this may or may not require an additional switching device configured to enable the at least one discharge resistor device in response to the malfunction of the electrolyser unit.

In an embodiment of the fast de-energizable power supply, the at least one resistor device is sized for an amount of energy stored in the electrolyzer unit (and, preferably, also in the one or more direct current-link capacitors). This allows to direct a maximum possible discharge current through the at least one resistor device within a short period of time without damaging the discharge resistor device and supports a fast and safe discharging of the electrolysis system.

In another embodiment of the fast de-energizable power supply, the controller unit is configured to apply a pulse width modulation to the discharge control signal. This allows to control the amount of discharge current per unit of time removed from the power supply and may, for example, allow to control the overall time required for completely discharging the power supply and the connected electrolyser unit. It may also allow to protect the components of the power supply and/or the connected electrolyser unit from overheating and damage due to the discharge current.

According to a second aspect of the invention, an electrolysis system comprises at least one electrolyser unit and a fast de-energizable power supply according to the first aspect of the invention and therefore implements the advantages and characteristics of the claimed fast de-energizable power supply.

And according to a third aspect of the invention, a method of operating a fast de-energizable power supply for an electrolysis system according to the first aspect of the invention comprises receiving, by a controller unit of a fast de-energizable power supply, a malfunction information from an electrolyser unit connected to the fast de-energizable power supply, providing a discharge control signal to an active switching device of the fast de-energizable power supply, and enabling, by the an active switching device, a discharging current flow at least from the connected electrolyser unit through at least one discharge resistor device of the fast de-energizable power supply in response to receiving said discharge control signal.

In an embodiment of the method, the step of enabling, by the active switching device, of a discharging current flow comprises enabling discharging current flow from one or more direct current-link capacitors of the fast de-energizable power supply through the at least one discharge resistor device of the fast de-energizable power supply in response to receiving said discharge control signal.

In another embodiment, the method further comprises disconnecting an alternating current-to-direct current power conversion unit of the fast de-energizable power supply from an AC power grid in response to the malfunction information.

And in one embodiment, the method further comprises enabling the one or more discharge resistor devices in response to the malfunction information.

Further, according to a fourth aspect of the invention, a computer program product comprises code portions that, when executed on a programmable apparatus, enable the programmable apparatus, which may be (part of) the controller unit of a fast de-energizable power supply for an electrolysis system according to the first aspect of the invention, to carry out steps of a method according to the third aspect of the invention. In other words, the computer program product comprises code portions that, when executed on the programmable apparatus, enable the fast de-energizable power supply for an electrolysis system according to the first aspect of the invention to carry out a method according to the third aspect of the invention.

The programmable apparatus may be a programmable apparatus of the fast de-energizable power supply for an electrolysis system according to the first aspect of the invention, in particular a controller unit of the fast de-energizable power supply, adapted to send to, process and receive signals from different units of the fast de-energizable power supply according to the first aspect of the invention, e.g. the malfunction information from the electrolyser unit or the discharge control signal for the active switching device. In another embodiment, the programmable apparatus may be connected or connectable to the fast de-energizable power supply. And according to a fifth aspect of the invention, a computer readable storage medium comprises a computer program product according the fourth aspect of the invention.

The computer program product corresponds to a computer program, at least including software code portions for performing steps of the method according to the invention when run on a programmable apparatus, such as the controller unit or other computer, for enabling the multi-stage electrical power supply to perform functions according to the invention.

The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates a first example of an electrolysis system comprising a fast de-energizable power supply according to an embodiment of the invention;
- Fig. 2: schematically illustrates a second example of an electrolysis system comprising a fast de-energizable power supply according to another embodiment of the invention;
- Fig. 3, 3A and 3B: schematically illustrate a third example of an electrolysis system comprising a fast de-energizable power supply according to another embodiment of the invention; and
- Fig. 4: schematically illustrates an example of a method of operating a fast de-energizable power supply for an electrolysis system according to an embodiment of the invention.

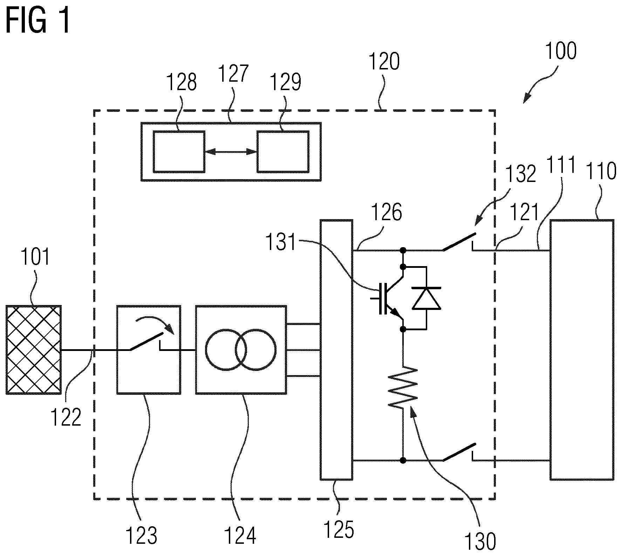

In Fig. 1, a first example of an electrolysis system 100 comprising a fast de-energizable power supply 120 according to an embodiment of the invention is schematically illustrated. The electrolysis system 100 also comprises an electrolyser unit 110 having an electrolyser input 111 connected to a direct current (DC) power supply output 121 of the fast de-energizable power supply 120, and an alternating current (AC) power supply input 122. The fast de-energizable power supply 120 further comprises an alternating current-to-direct current (AC-DC) power conversion unit 125 having an AC-DC converter output 126 and an input connected via the AC power supply input 122 and, therefore, to an AC power source, in particular to a (private or public) AC power grid 101, through a switchgear 123. In the example shown in Fig. 1, the AC-DC power conversion unit 125 may comprise a thyristor-based rectifier, i.e., an AC-DC power converter unit built using thyristor devices. However, other power semiconductor switching elements may be used. The AC voltage received from the AC power grid 101 is supplied via the switchgear 123 in an ON state, i.e. an enabled- or connected-state, to a transformer unit 124 that converts the grid voltage to a lower voltage, e.g. below 1000 V. In the shown embodiment, it is converted to three phase-shifted AC voltage signals.

The fast de-energizable power supply 120 further comprises a controller unit 127 configured to provide a discharge control signal in response to a malfunction of the electrolyser unit 110. The malfunction information may be provided as a signal directly from the electrolyser unit or via a user interface (not shown), e.g., an alarm button, from supervising personell.

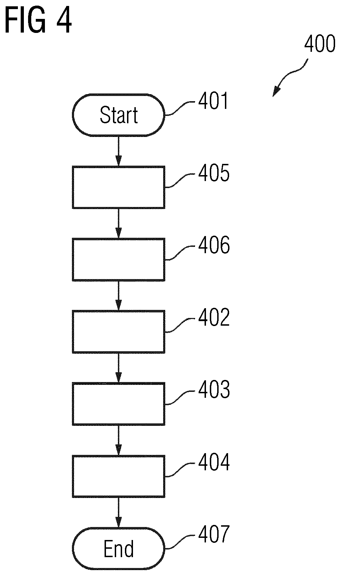

The fast de-energizable power supply 120 has a controller unit 127 configured to send and receive all required signals to and from different units, components and switches of the power supply 120 (connections not shown). In the shown embodiment, the controller unit 127 is or comprises a programmable apparatus with at least a processor 128 and a memory 129, wherein the memory 129 comprises code portions of a computer program product, that, when executed by the processor of the programmable apparatus, enable the fast de-energizable power supply 120 to carry out steps of an operation method as described in connection with Fig. 4. In particular, the controller unit 127 is configured to provide a discharge control signal in response to a malfunction of the electrolyser unit 110.

Further, the shown fast de-energizable power supply 120 comprises a discharge resistor device 130, and an active switching device 131 that is configured to enable a discharging current flow at least from said connected electrolyser unit 110 through the discharge resistor device 130 in response to receiving the discharge control signal from the controller unit 127. In the example shown in Fig. 1, the active switching device 131 is an IGBT. However, other power semiconductor switching elements may be used.

In the shown embodiment, the controller unit 127 is further configured to disconnect the AC-DC power conversion unit 125 from the AC power grid 101 in response to the malfunction of the electrolyser unit 110. The disconnection is achieved by setting the shown switchgear 123 to an OFF state, i.e., to a disabled- or disconnect-state.

In the example shown in Fig. 1, the fast de-energizable power supply 120 further comprises a connect switch 132, e.g. a DC contactor, to connect the AC-DC power conversion unit 125 during normal operation mode (connect switch 132 in ON state) and that is kept in ON state during malfunction mode to enable discharge current flow from the electrolyser unit 110 through the active switching device 131 and the discharge resistor device 130. However, in order to disconnect the electrolyser unit 110 during malfunction mode without using the de-energizing functionality of the fast de-energizable power supply 120, the connect switch 132 can be set to OFF state.

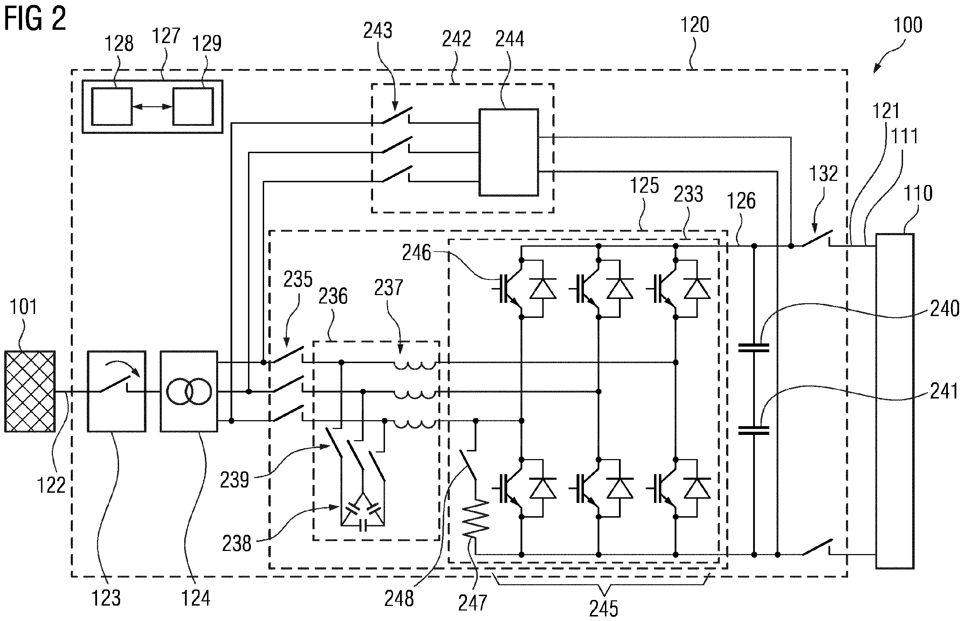

In Fig. 2, a second example of an electrolysis system 100 comprising a fast de-energizable power supply 120 according to another embodiment of the invention is schematically illustrated. Elements identical or similar to the elements shown in Fig. 1 are shown with identical reference numerals. Only elements differing from Fig. 1 will be described in detail. In the shown example, the AC-DC power conversion unit 125 is the main AC-DC power conversion unit and comprises a main rectifier unit, i.e. a main AC-DC converter unit 233 that is an IGBT-based rectifier, with an input connected to a high-frequency filter unit 236 with an input connected to receive the transformed low voltage AC signal from the transformer unit 124 through a circuit breaker switch 235, e.g. an air circuit breaker (ACB), that is set to an OFF state at least during malfunction mode, i.e. in response to a malfunction of the electrolyser unit 110.

The shown AC-DC power conversion unit 125 also comprises a 3-phase high frequency filter unit 236 consisting of inductive elements 237, capacitive elements 238 and switching elements 239, wherein the controller unit 127 is further configured to disconnect or disable the 3-phase high-frequency filter unit 236 in response to the malfunction of the electrolyser unit 110 to protect the 3-phase high frequency filter unit 236 from receiving any discharge current. For this, the switching elements 239 of the 3-phase high-frequency filter unit 236 are all set to an OFF state.

In the example shown in Fig. 2, the fast de-energizable power supply 120 further comprises direct current (DC)-link capacitors 240, 241 connected to the AC-DC converter output 126, and the power supply 120 comprises an additional pre-charge AC-DC power conversion unit 242 for providing pre-charge DC current to the DC-link capacitors 240, 241 during normal operation ramp-up or ramp-down phases of the electrolysis system 100. The shown additional pre-charge AC-DC power conversion unit 242 comprises a pre-charge switch 243 and an additional rectifier, i.e., an additional AC-DC converter unit 244. The controller unit 127 is further configured to disconnect or disable the additional pre-charge AC-DC power conversion unit 242 in response to the malfunction of the electrolyser unit 110.

The main AC-DC converter unit 233 of the AC-DC power conversion unit 125 is an IGBT-based rectifier, wherein IGBT switching elements 245 are connected in a full bridge rectifier configuration and the IGBT switching element situated on the TOP side of the full bridge of the main AC-DC converter unit 233 is used as the active switching device 246 that is configured to receive the discharge control signal from the controller unit 127 and is configured to enable discharging current flow from the electrolyser unit and/or the DC-link capacitors 240, 241 through the discharge resistor device 247 in response to receiving the discharge control signal. In the shown configuration, the discharge resistor device 247 is placed in the AC circuit of the main AC-DC converter unit 233. Since a 3-phase system is used, it can be connected to any of the phases with, if the phase to which it is connected also implies the use of the respective TOP switching element in the full bridge configuration as the active switching device 246.

In the shown embodiment, the discharge resistor device 247 is configured to be disabled in an absence of the malfunction of the electrolyser unit 110. This is achieved by an additional discharge switch 248 that is set to an OFF state during normal operation mode and is only set to an ON state in response to malfunction of the electrolyser unit 110.

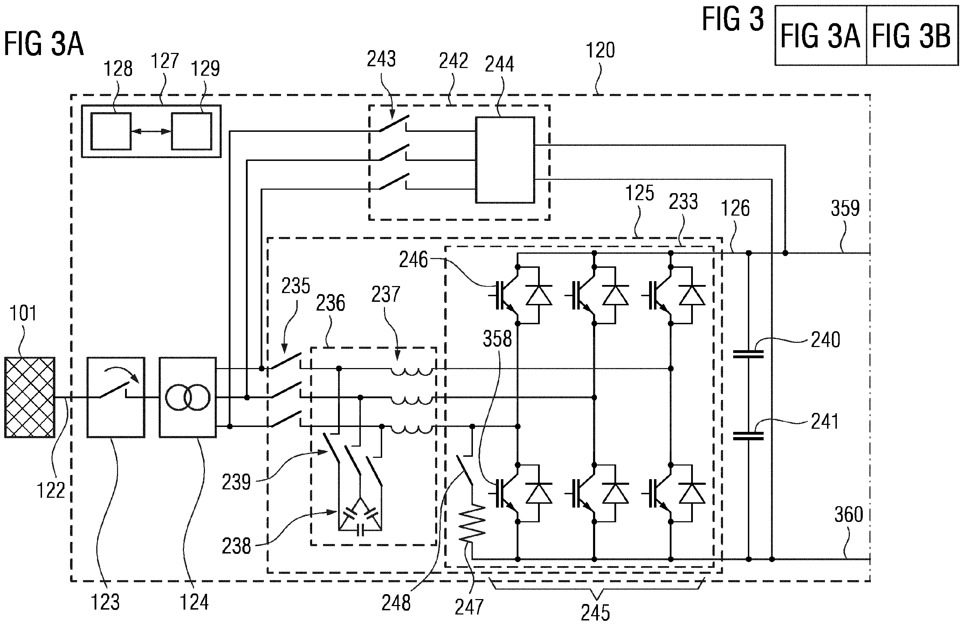

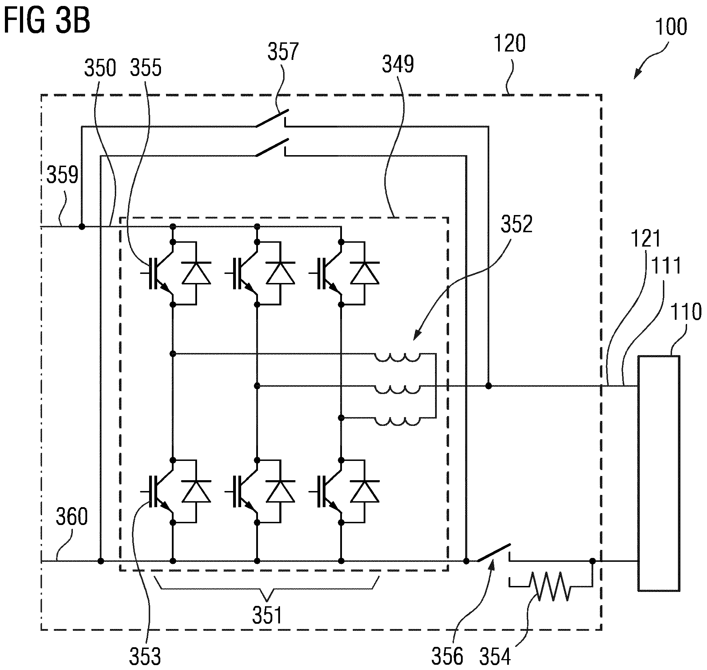

In Fig. 3, 3A and 3B, a third example of an electrolysis system 100 comprising a fast de-energizable power supply 120 according to another embodiment of the invention is schematically illustrated, wherein Fig. 3 illustrates how Fig. 3A and Fig. 3B together show the complete schematic circuit topology of the third example. Elements identical or similar to the elements shown in Fig. 1 or Fig. 2, respectively, are shown with identical reference numerals. Only elements differing from Fig. 1 and Fig. 2 will be described in detail. The left part of the schematic circuit topology of the third example of the electrolysis system 100 shown in Fig. 3A and the right part of the schematic circuit topology of the third example of the electrolysis system 100 shown in Fig. 3B are connected at connecting lines 359 and 360.

In the shown example embodiment, the fast de-energizable power supply 120 further comprises a direct current-to-direct current (DC-DC) power conversion unit 349 having a DC-DC converter input 350 connected to the AC-DC converter output 126. In other words, the fast de-energizable power supply 120 is a double-stage power supply with an AC-DC power conversion unit 125 as a first stage and a DC-DC power conversion unit 349 as a second stage. The DC-DC power conversion unit 349 comprises a DC-DC converter built with IGBTs as switching elements 351 in a full bridge configuration, and inductive elements 352. Here, in an example embodiment, the DC-DC power conversion unit 349 comprises an active switching device 353 that is configured to receive the discharge control signal and to let the discharge current flow through a discharge resistor device 354 in response to a malfunction of the electrolyser unit 110. As shown, the BOTTOM IGBT switching element of the full bridge configuration is used as said active switching device 353. This element may also be used as the active switching device 353, if only one leg of the configuration, i.e. a half bridge configuration, is used. In another example embodiment and in case the topology uses the full bridge configuration with two active switches in series on one leg), both TOP and BOTTOM switching elements can be used as active switching device 353 and addition active switching device 355 which are activated to transfer the discharge current to the discharge resistor device 354.

In the shown embodiment, the discharge resistor device 354 is configured to be disabled in an absence of the malfunction of the electrolyser unit 110. This is achieved by an additional discharge switch 356 that is set to bypass the discharge resistor device 354 during normal operation mode and is only set to enable the discharge resistor device 354 in response to malfunction of the electrolyser unit 110.

In the shown embodiment, the fast de-energizable power supply further comprises a bypass switch 357 that allows to bypass the DC-DC power conversion unit 349 and use, as previously shown in Fig. 2, the active switching device 246 of the main AC-DC power converter unit 233 together with the connected discharge resistor device 247 for consumption of the discharge current instead.

In the shown example, as another possible embodiment, given that the main AC-DC converter unit has the used IGBT switching elements 245 connected in a full bridge rectifier configuration, i.e. the main AC-DC converter unit 233 is configured as a full bridge circuit arrangement, it may not only comprises said active switching device 246, but also an additional active switching device 355 that is configured to enable the discharging current flow together with said active switching device 246 in response to receiving said discharge control signal, i.e., two corresponding TOP side and BOTTOM side switching elements are used as the active switching device 246 and the additional active switching device 358 configured to connect a discharge resistor device to receive the discharge current. In this case, the discharge resistor device 354 can be used for discharge power consumption and the discharge resistor device 247 can remain disabled or may be removed.

In Fig. 4, an example of a method 400 of operating a fast de-energizable power supply for an electrolysis system according to an embodiment of the invention is schematically shown.

After start 401 of the method of operating a fast de-energizable power supply for an electrolysis system , e.g., as shown in Fig. 1, Fig. 2 or Fig. 3, the method comprises receiving 402, by a controller unit of a fast de-energizable power supply, a malfunction information from an electrolyser unit connected to the fast de-energizable power supply, providing 403, by the controller unit, a discharge control signal to an active switching device of the fast de-energizable power supply, and enabling 404, by the an active switching device, a discharging current flow at least from the connected electrolyser unit through at least one discharge resistor device of the fast de-energizable power supply in response to receiving said discharge control signal.

In the shown embodiment of the method, the step of enabling 404, by the active switching device, of a discharging current flow also comprises enabling discharging current flow from one or more direct current-link capacitors of the fast de-energizable power supply through the at least one discharge resistor device of the fast de-energizable power supply in response to receiving said discharge control signal.

In the shown embodiment, before the steps of providing 403, by the controller unit, the discharge control signal to the active switching device of the fast de-energizable power supply, and the step of enabling 404, by the an active switching device, the discharging current flow, a step of disconnecting 405 an AC-DC power conversion unit of the fast de-energizable power supply from an AC power grid in response to said malfunction information and a step of enabling 406 the one or more discharge resistor devices in response to said malfunction information are carried out.

The method ends 407 when the electrolysis system is completely de-energized, i.e., no more discharge current flows through the discharge resistor device, or if the electrolyser unit exhibits no more malfuction. The method may be restarted any time a new malfuntion information is received while the electrolysis system is in normal operation mode again.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

In this document, the terms "input" and "output" refer to input and output interfaces, pins or any other input and output connection lines. However, the terms "input" and "output" address the complete input or output interface, i.e., both connection lines in a DC circuit and lines for all three shown phases of an AC connection with three phases. For the sake of clarity, in the figures usually only one of these set of connection lines is numbered by a reference numeral although it identifies the set of connection lines.

The mere fact that certain features are recited in mutually different claims does not indicate that a combination of these features cannot be used in advantage.

Although the invention has been illustrated and described in detail by the shown preferred embodiments, the invention is not limited by the disclosed examples and other variations can be derived therefrom by those skilled in the art without departing from the scope of the invention.

In summary, the invention relates to a fast de-energizable power supply 120 for an electrolysis system 100. It comprises an alternating current power supply input 122 connectable to an AC power grid 101, a direct current power supply output 121 connected to an electrolyser unit 110, an alternating current-to-direct current power conversion unit 125 having an AC-DC converter output 126, a controller unit 127 configured to provide a discharge control signal in response to a malfunction of the electrolyser unit 110, at least one discharge resistor device 130, 247, 354, and an active switching device 131, 246, 353 configured to enable a discharging current flow at least from said connected electrolyser unit 110 through the at least one discharge resistor device 130, 247, 354 in response to receiving said discharge control signal.

The invention also relates to an electrolysis system 100, an operation method 400 and a computer program product.

## Claims

1. Fast de-energizable power supply (120) for an electrolysis system (100), comprising
an alternating current power supply input (122) connectable to an AC power grid (101);
a direct current power supply output (121) connected to an electrolyser unit (110);
an alternating current-to-direct current power conversion unit (125) having an AC-DC converter output (126);
a controller unit (127) configured to provide a discharge control signal in response to a malfunction of the electrolyser unit (110);
at least one discharge resistor device (130, 247, 354); and
an active switching device (131, 246, 353) configured to enable a discharging current flow at least from said connected electrolyser unit (110) through the at least one discharge resistor device (130, 247, 354) in response to receiving said discharge control signal.

2. The fast de-energizable power supply as claimed in claim 1, further comprising one or more direct current-link capacitors (240, 241) connected to said AC-DC converter output (126); and wherein the active switching device (246, 353) is configured to enable discharging current flow from said one or more direct-current-link capacitors (240, 241) through the at least one discharge resistor device (247, 354) in response to receiving said discharge control signal.

3. The fast de-energizable power supply as claimed in claim 1 or claim 2, wherein the controller unit (127) is further configured to disconnect the alternating current-to-direct current power conversion unit (125) from the AC power grid (101) in response to said malfunction of the electrolyser unit (110).

4. The fast de-energizable power supply as claimed in any of the preceding claims, further comprising a direct current-to-direct current power conversion unit (349) having a DC-DC converter input (350) connected to the AC-DC converter output (126) .

5. The fast de-energizable power supply as claimed in any of claims 1 to 4, wherein the alternating current-to-direct current power conversion unit (125) comprises an alternating current-to-direct current converter unit (233) that comprises said active switching device (246).

6. The fast de-energizable power supply as claimed in claim 4, wherein the direct current-to-direct current power conversion unit (349) comprises the active switching device (353).

7. The fast de-energizable power supply as claimed in any of the preceding claims, wherein the at least one discharge resistor device (130, 247, 354) is configured to be disabled in an absence of the malfunction of the electrolyser unit (110) .

8. The fast de-energizable power supply as claimed in any of the preceding claims, wherein the at least one resistor device (130, 247, 354) is sized for an amount of energy stored in the electrolyser unit (110).

9. The fast de-energizable power supply as claimed in any of the preceding claims, wherein the controller unit (127) is configured to apply a pulse width modulation to the discharge control signal.

10. Electrolysis system (100) comprising at least one electrolyser unit (110) and a fast de-energizable power supply (120) as claimed in any of claims 1 to 9.

11. Method (400) of operating a fast de-energizable power supply for an electrolysis system as claimed in any of claims 1 to 9, comprising
receiving (402), by a controller unit of a fast de-energizable power supply, a malfunction information from an electrolyser unit connected to the fast de-energizable power supply;
providing (403), by the controller unit, a discharge control signal to an active switching device of the fast de-energizable power supply; and
enabling (404), by an active switching device, a discharging current flow at least from the connected electrolyser unit through at least one discharge resistor device of the fast de-energizable power supply in response to receiving said discharge control signal.

12. The method as claimed in claim 11, wherein the enabling (404), by the active switching device, of a discharging current flow comprises enabling discharging current flow from one or more direct current-link capacitors of the fast de-energizable power supply through the at least one discharge resistor device of the fast de-energizable power supply in response to receiving said discharge control signal.

13. The method as claimed in claim 11 or claim 12, further comprising disconnecting (405) an alternating current-to-direct current power conversion unit of the fast de-energizable power supply from an AC power grid in response to said malfunction information.

14. The method as claimed in any of claims 11 to 13, further comprising enabling (406) the one or more discharge resistor devices in response to said malfunction information.

15. A computer program product, comprising code portions that, when executed on a programmable apparatus, enable the programmable apparatus to carry out steps of a method (400) according to any of the claims 11 to 14.
